# EUROPÄISCHE PATENTSCHRIFT

(11) **EP 1 641 664 B1**
(45) Veröffentlichungstag und Bekanntmachung des Hinweises auf die Patenterteilung: **27.02.2013**
(21) Anmeldenummer: 04729607.4
(22) Anmeldetag: 27.04.2004
(51) Int. Cl.: B60S 1/40, B60S 1/38

(54) **WISCHARM FÜR EINEN SCHEIBENWISCHER**
WIPER ARM FOR A WINDSCREEN WIPER
BRAS D'ESSUIE-GLACE

(30) Priorität: 30.06.2003 DE 10329566
(43) Veröffentlichungstag der Anmeldung: 05.04.2006
(73) Patentinhaber: ROBERT BOSCH GMBH, 70442 Stuttgart (DE)
(72) Erfinder: MAYER, Stephan, 76137 Karlsruhe (DE); VAN DE ROVAART, Robert-Jan, 76131 Karlsruhe (DE)
(86) Internationale Anmeldenummer: PCT/DE2004/000882
(87) Internationale Veröffentlichungsnummer: WO 2005/000647

(56) Entgegenhaltungen:
- DE-A- 3 619 589
- DE-A- 10 016 850
- DE-A- 19 732 555

## Beschreibung

Die Erfindung betrifft einen Wischarm für einen Scheibenwischer, umfassend ein Befestigungsteil, ein Gelenkteil und eine Wischstange, an deren freies Ende eine Kunststoff-Aufnahmeeinrichtung für ein Wischblatt angeformt ist, die zum Eingriff zwischen zwei Seitenwangen eines Tragsystems des Wischblattes vorgesehen ist, wobei die Aufnahmeeinrichtung in eine quer zwischen den Seitenwangen angeordnete Achse einhängbar ist, so dass das Wischblatt drehbar am Wischarm gelagert ist. Die Erfindung betrifft außerdem einen Wischhebel mit einem derartigen Wischarm und mit einem Wischblatt.

Ein derartiger Wischarm ist bereits aus der DE 197 47 857 A1 bekannt.

Konventionelle Scheibenwischer besitzen einen Wischarm, der aus einem Befestigungsteil, einem daran angelenkten Gelenkteil sowie einer mit dem Gelenkteil starr verbundenen Wischstange aufgebaut ist. Diese Komponenten sind üblicherweise massiv, oder als Stanz-Biegeteile, aus Metall ausgeführt. Die bekannten Scheibenwischer haben ferner ein Wischblatt, das aus einem Tragbügelsystem mit einem übergeordneten Mittelbügel und gelenkig verbundenen, untergeordneten Zwischenbügeln sowie Krallenbügeln und aus einer Wischleiste aufgebaut ist. Das Wischblatt ist am Wischarm angelenkt, indem ein hakenförmiges Ende der Wischstange ein Verbindungsstück hält, das zwischen zwei Seitenwangen eines kastenförmigen Durchbruchs im Mittelbügel angeordnet ist und mit einer Einhängung eine quer im Kasten des Mittelbügels angeordnete Achse (Gelenkbolzen) umfasst. Das so gebildete Gelenk führt das Wischblatt während der Schwenkbewegung über die Scheibe, wobei das Gelenk und das Tragbügelsystem ermöglichen, dass sich die Wischleiste einer Wölbung der Scheibe anpassen kann. Das Wischblatt wird mittels einer Zugfeder, die im Gelenkteil untergebracht ist und sich einerseits am Gelenkteil und andorerseits am Befestigungsteil abstützt, gegen die Scheibe gedrückt.

Aus DE 36 19 589 A1 ist ein Wischblatt mit einem verbindungsstück bekannt, wobei das Verbindungsstück über eine federnde Rastzunge in ein hakenförmiges Ende eines wischarmes eingerastet ist. Zum Lösen der federnden Zunge ist eine Lösetaste vorgesehen, die sich nach unten über einen Tragbügel des Wischblattes hinaus erstreckt und seitlich abstehende Fortsätze aufweist. Mithilfe der Lösetaste kann das Verbindungsstück einfach von dem Wischarmhaken gelöst werden, ohne dass der Wischarm zu hoch von der Fahrzeugscheibe abgehoben werden muss.

Aus DE 197 32 555 A1 ist ein Wischblatt für eine Wischvorrichtung bekannt. Das Wischblatt weist eine elastische Wischleiste auf, die über ein Wischblattgestell an einem antreibbaren Wischarm gehalten ist. Das Wischblattgestell weist einen übergeordneten Bügel und einen untergeordneten Bügel auf, die um eine quer zu ihrer Längsrichtung verlaufende geometrische Achse schwenkbar miteinander verbunden sind. Der übergeordnete Bügel weist in seinem Gelenkbereich eine nach unten, d.h. in Richtung auf die Fahrzeugscheibe offenen Querschnitt mit einem Bügelrücken auf, wobei von diesen zwei abstehende Seitenwände ausgehen, die zumindest im Gelenkbereich des übergeordneten Bügels den untergeordneten Bügel übergreifen und zumindest lokal mit den Innenseiten seiner Seitenwände an gegenüberliegenden Außenseiten des untergeordneten Bügels anliegen. Im Gelenkbereich sind an den Unterseiten der Seitenwände des übergeordneten Bügels Haltenocken ausgebildet, die nach unten konvexe Lagerflächen aufweisen, die im Gelenkbe reich des untergeordneten Bügels an dessen gegenüberliegenden Außenseiten als nach oben offene Lagerschalen mit konkaven Lagerschalen ausgebildet sind. Die Lagernocken des übergeordneten Bügels mit ihren konvexen Lagerflächen sind gleitend auf den konkaven Lagerflächen in den Lagerschalen des untergeordneten Bügels gelagert. An dem untergeordneten Bügel sind Rastmittel vorgesehen, die sich im gegenseitigen Eingriff befinden und den untergeordneten Bügeln in Richtung seiner Höhe an dem übergeordneten Bügel halten bzw. sichern.

Es sind neuerdings, beispielsweise aus der oben genannten Offenlegungsschrift, auch wischarme bekannt, bei denen insbesondere die Wischstange aus Kunststoff durch spanloses Formen gefertigt ist. An die kunststoff-Wischstange können in einfacher Weise weitere Funktionsteile angeformt werden. Beim gattungsgemäßen Wischarm wird von der Möglichkeit Gebrauch gemacht, am freien Ende einer derartigen Wischstange eine Aufnahmeeinrichtung aus Kunststoff zum Einhängen bzw. Einclipsen des Wischblattes anzuformen, so dass ein separates verbindungsstück nicht mehr erforderlich ist. Dabei ist es aus der genannten DE 197 47 857 A1 auch bekannt, eine Wischstange mit angeformter Aufnahmeeinrichtung einstückig mit einem Gelenkteil auszubilden, wobei zweckmäßigerweise mindestens das Gelenkteil ein Hohlprofil aus Kunststoff aufweist. Ein derartiges integriertes Gebilde wird auch als Kunststoff-Gelenkarm bezeichnet.

Problematisch beim gattungsgemäßen Wischarm bzw. Wischhebel ist die Tatsache, dass die Verbindung zwischen Wischblatt und Wischarm bisher nicht nur eine für die Wischbewegung erforderliche minimale Verdrehung, sondern ein unbegrenztes Verdrehen (um bis zum 180°) des Wischblattes in der Wischblatteinhängung der Aufnahmeeinrichtung, also im Wischarm, erlaubt.

Beispielsweise können die Spitze des Wischblattes und/oder die Fahrzeugscheibe beschädigt werden, wenn es, etwa beim Reinigen der Scheibe, zu einem Aufschlagen eines um ca. 90° verdrehten Wischblattes aus der Abklappstellung auf die Scheibe kommt. Das Verdrehen des Wischblattes im Wischarm kann außerdem, wenn der Drehwinkel unbegrenzt bleibt, zu einem unbeabsichtigten Entclipsen des Wischblattes aus dem Wischarm führen. Ein weiteres Gefahrenmoment beim zu starken Verdrehen besteht darin, dass der Clipsbereich der Aufnahmeeinrichtung des Wischarms den Kasten des Wischblattes aufweitet. Dies ist besonders nachteilig bei Wischhebeln, die aus einem Kunststoff-Gelenkarm einerseits und einem Metallwischblatt andererseits aufgebaut sind. Die durch das zu starke Verdrehen hervorgerufene Aufweitung des Kastenmaßes des Mittelbügels führt zu größerem Spiel und erhöhtem Verschleiß der Verbindung zwischen Wischarm und Wischblatt.

Der Erfindung liegt daher die Aufgabe zu Grunde, einen Wischarm der eingangs genannten Art so weiterzubilden, dass die ungehinderte Verdrehung des Wischblattes im Wischarm auf einen definierbaren Bereich beschränkt, das Wischblatt im Wischarm jedoch weiterhin leicht montier- und demontierbar ist.

Diese Aufgabe zu wird erfindungsgemäß durch einen Wischarm gemäß Anspruch 1 gelöst. Weiterhin betrifft die erfindungsgemäße Lösung einen Wischhebel gemäß Anspruch 7 mit einem Wischarm und mit einem Wischblatt. Weiterbildungen und bevorzugte Maßnahmen ergeben sich aus den Unteransprüchen.

Bei einem erfindungsgemäßen Wischarm der eingangs angegebenen Art ist demgemäß vorgesehen, im Bereich des gelenkteilseitigen Endes der Aufnahmeeinrichtung mindestens eine Federzunge in der Weise einstückig anzuformen, dass die Federzunge zwischen die beiden Seitenwangen eingreift und sich bis über die unteren Ränder der Seitenwangen hinaus erstreckt. Am freien Ende der Federzunge ist eine seitlich ausgreifende Haltenocke angeformt, die eine ungehinderte Verdrehbewegung des Wischblattes durch Anschlag der Haltenocke am unteren Rand einer Seitenwange begrenzt.

Gemäß der Erfindung bildet demnach die Federzunge, die beispielsweise auch als federnder Clip oder als Schnapphaken realisiert sein kann, zusammen mit der an ihrem freien Ende angeordneten Haltenocke ein integriertes Verdrehsicherungselement am Wischarm, das im Zusammenspiel mit einem unteren Rand der Seitenwangen die Verdrehbewegung des Wischblattes zuverlässig begrenzt. Gleichzeitig hat die Kunststoff-Federzunge auf Grund ihrer Form genügend laterale Elastizität, um ohne weiteres im Kasten des Wischblattes montier- und demontierbar zu sein.

Bei dem erfindungsgemäßen Wischarm sind Gelenkteil und Wischstange bevorzugt als Kunststoff-Gelenkarm ausgebildet. Das integrierte Verdrehsicherungselement lässt sich fertigungstechnisch leicht verwirklichen, indem die entsprechenden Teile bei der Herstellung der Kunststoff-Aufnahmeeinrichtung, bzw. bei der Herstellung eines integralen Kunststoff-Gelenkarms, mitgegossen bzw. mitgespritzt werden. Dabei können auch die üblicherweise verwendeten KunststoffMaterialien, wie PBT mit 30% Glasfaser, benutzt werden. Eine Nachbearbeitung ist normalerweise nicht erforderlich. Ein weiterer Vorteil besteht nicht zuletzt auch darin, dass das Verdrehsicherungselement das Außendesign des Wischarms nur in geringem Maße beeinträchtigt, da es weitgehend durch das Wischblatt verdeckt ist.

Die Größe des ungehinderten Verdrehwinkels zwischen Wischarm und Wischblatt ist im Wesentlichen durch Wahl des Abstands zwischen der Haltenocke und dem unteren Rand einer Seitenwange festlegbar.

Es ist von Vorteil hinsichtlich der Stabilität und Sicherheit des erfindungsgemäßen Verdrehsicherungselementes, wenn seitlich gegenüberliegend zwei Federzungen an der Aufnahmeeinrichtung angeordnet sind, deren Haltenocken jeweils seitlich zur zugehörigen Seitenwange hin ausgreifend angeformt sind.

Dies eröffnet auch die besonders vorteilhafte Möglichkeit, dass die Federzungen so angeformt sind, dass sie beim Eingriff zwischen die beiden Seitenwangen jeweils an der Innenseite der zugehörigen Seitenwange elastisch anliegen. Dadurch ist neben der Begrenzungsfunktion auch eine bessere Führung des Wischblattes im Wischarm realisiert. Vorteilhafterweise wird das Spiel der Aufnahmeeinrichtung im Kasten des Wischblattes verringert, was nicht nur mechanisch günstig ist, sondern auch durch Vermeidung von vibrationsbedingtem Rattern etc. zu einer Geräuschoptimierung führt.

Die genannte Integration einer Führungs- /Dämpfungsfunktion wird grundsätzlich über die Dimensionierung und Anordnung der beiden Federzungen erreicht. Der Effekt kann noch verstärkt werden, indem an der zur Innenseite der zugehörigen Seitenwange hin gerichteten Seite der jeweiligen Federzunge eine flache Führungsfläche angeformt ist.

Die leichte Montier- und Demontierbarkeit, die vor allem durch die laterale Elastizität der Federzungen gegeben ist, kann vorteilhaft noch dadurch verbessert werden, dass die Haltenocken an ihrer vom Wischarm abgewandten Seite mit einer Einführschräge ausgebildet sind.

Der erfindungsgemäßen Wischhebel umfasst ein Wischblatt sowie einen Wischarm der oben beschriebenen Art. Dabei ist es von Vorteil, wenn das Wischblatt als Metallwischblatt oder Kunststoffwischblatt und der Wischarm als Kunststoff-Gelenkarm ausgeführt ist und die Aufnahmeeinrichtung zwischen die Seitenwangen eines im Mittelbügel eines Tragbügelsystems des Metallwischblattes gebildeten Kastens eingreift. Die resultierende Verbindung erweist sich als mechanisch stabiler und haltbarer als bisher.

Weitere Vorteile und Ausgestaltungen der Erfindung sind in der nachfolgenden Beschreibung des in den Figuren der Zeichnung dargestellten Ausführungsbeispiels näher erläutert. Es zeigt:
Figur 1 in perspektivischer Ansicht schräg von oben einen erfindungsgemäßen Wischhebel mit einem erfindungsgemäßen Kunststoff-Gelenkarm und einem Wischblatt,
Figur 2, in gleicher Ansicht, das Wischblatt gemäß Figur 1,
Figur 3, in einer Seitenansicht, einen erfindungsgemäßen Kunststoff-Gelenkarm gemäß Figur 1,
Figur 4 eine vergrößerte Darstellung der Aufnahmeeinrichtung und des Verdrehsicherungselementes des Gelenkarms gemäß Figur 3,
Figur 5 eine vergrößerte Ansicht schräg von vorn auf die Aufnahmeeinrichtung und das Verdrehsicherungselement des Gelenkarms gemäß Figur 3,
Figur 6 einen Ausschnitt des Wischhebels gemäß Figur 1, aus dem das Zusammenspiel von Wischarm, Verdrehsicherungselement und Wischblatt hervorgeht.

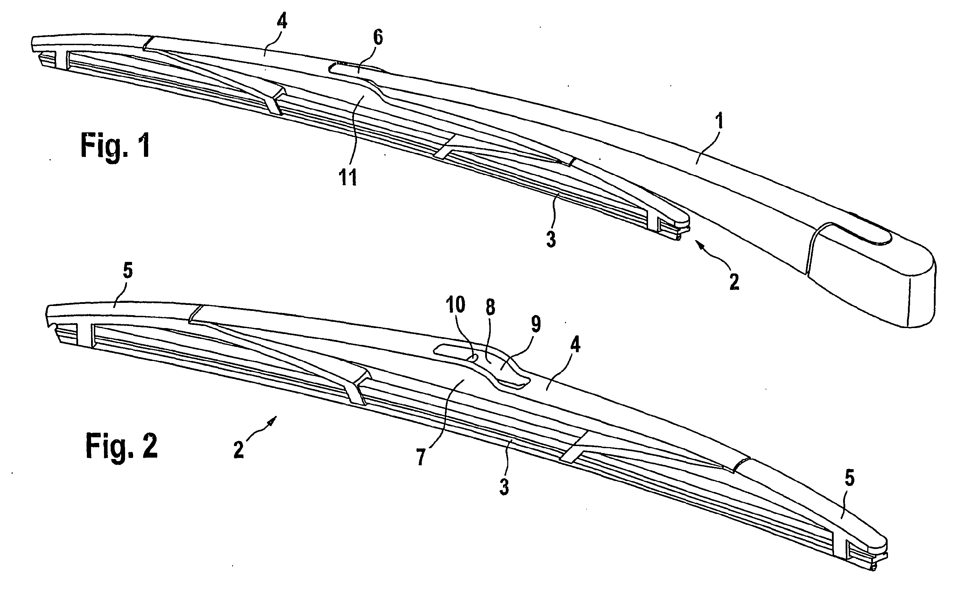

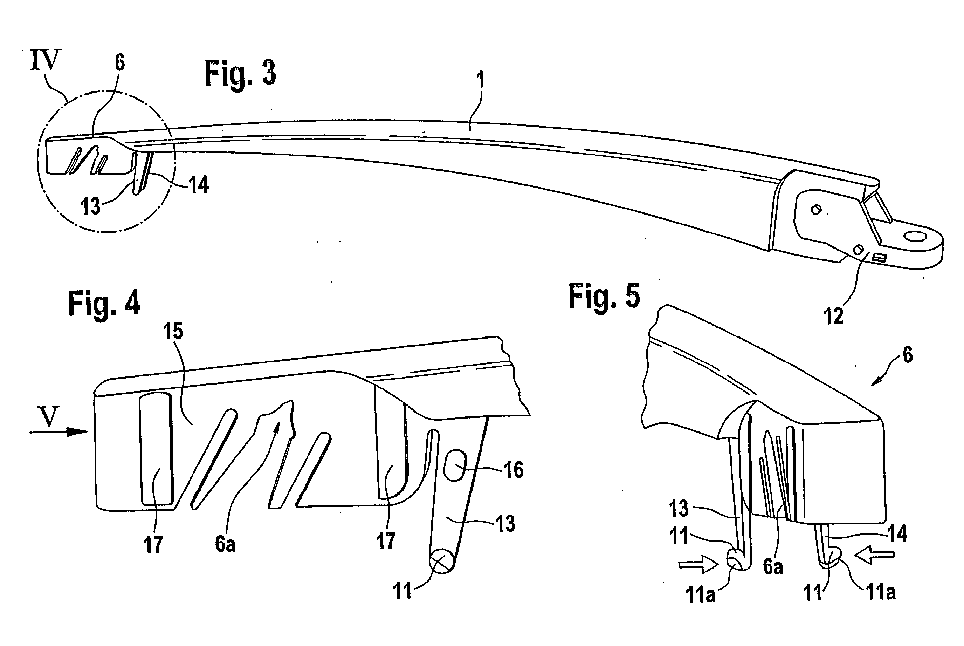

Figur 1 zeigt beispielhalber einen Wischhebel, der einen Kunststoff-Gelenkarm 1 umfasst, in den ein Metallwischblatt 2 eingeclipst ist. Das in Figur 2 einzeln dargestellte Wischblatt 2 ist in an sich bekannter Weise aus einer Wischleiste 3 (Wischgummi mit Federschiene) und einem Tragbügelsystem mit einem übergeordneten Mittelbügel 4 und gelenkig verbundenen, untergeordneten Krallenbügeln 5 aufgebaut. Das Tragbügelsystem kann gegebenenfalls noch durch Zwischenbügel ergänzt werden. Das Wischblatt 2 ist am Wischarm 1 angelenkt, indem dessen freies, als Aufnahmeeinrichtung 6 ausgebildetes Ende (im Folgenden in Figur 3 bis 5 näher dargestellt) zwischen die Seitenwangen 7 und 8 eines kastenförmigen Durchbruchs 9 im Mittelbügel 4 eingreift und mit einer Einhängung 6a, vgl. Figur 4, eine quer im Kasten 9 des Mittelbügels 4 angeordnete Achse 10 (Gelenkbolzen) umfasst. Der Wischarm 1 führt das Wischblatt 2 mittels des so gebildeten Gelenks während der Schwenkbewegung über die Scheibe. Erkennbar in Figur 1 ist auch eine Haltenocke 11 als Teil des - erwünschterweise optisch meist überwiegend verdeckten - Verdrehsicherungselementes, dessen Gesamt-Aufbau und -Funktion im Folgenden noch näher beschrieben wird.

Figur 3 zeigt den integralen Kunststoff-Gelenkarm 1, dessen eines Ende gelenkig mit einem Befestigungsteil 12 verbunden ist und dessen gegenüberliegendes, freies Ende als Kunststoff-Aufnahmeeinrichtung 6 ausgebildet ist. Die Aufnahmeeinrichtung 6 ist, vgl. die Detailansicht gemäß Figur 4, mit einer beidseitig symmetrischen Einhängung 6a versehen, in die der Bolzen 10 des Wischblattes 2 quer einclipsbar ist.

Am gelenkteilseitigen Ende der Aufnahmeeinrichtung 6 sind, seitlich gegenüberliegend, zwei Federzungen 13 und 14 angeformt. Die Federzungen 13 und 14 fluchten annähernd mit den jeweiligen Seitenwänden der Aufnahmeeinrichtung 6, so dass die nebeneinander angeordnete Seitenwand 15 und die Federzunge 13 eng, gegebenenfalls mit einer geringen Vorspannung, anliegend an die zugehörige Seitenwange 7 des Kastens 9 im Wischblatt 2, vgl. Figur 2, eingefügt werden können. Entsprechend liegen die gegenüberliegende Seitenwand und die Federzunge 14 eng an der Seitenwange 8 an. Die sich ergebende, vorteilhafte Führung wird noch verstärkt durch die Wischblattführungen 17 an der Aufnahmeeinrichtung 6, sowie durch flache, an den Außenseiten der Federzungen 13 und 14 angeformte Führungsflächen 16.

In der Ansicht gemäß Figur 5 ist die symmetrische Anordnung der Federzungen 13 und 14 besonders gut erkennbar. Angedeutet durch zwei Pfeile ist auch die Einfederrichtung, in der die beiden Federzungen 13 und 14 bei der Montage bzw. bei einer Demontage zusammendrückbar sind. Die Montage wird im Übrigen auch durch die am unteren Ende der Haltenocken 11 vorgesehenen Einführschrägen 11a, vgl. insbesondere Figur 5, erleichtert.

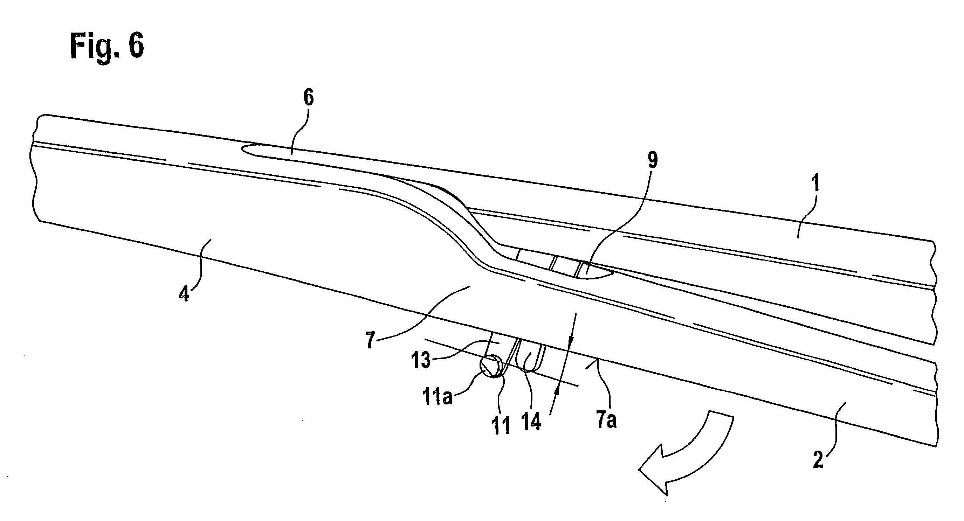

Figur 6 zeigt, in einer Arbeitsstellung des Wischblattes, den Eingriff der beiden Federzungen 13 und 14 in das Ende des Kastens 9 des Wischblattes 2. Aus Figur 6 kann ferner das Zusammenspiel der Haltenocken 11 mit dem unteren Rand 7a der Seitenwangen 7 und 8 des Mittelbügels 4 bei Verdrehung des Wischblattes 2 abgeleitet werden. Wenn das Wischblatt 2, wie durch die schmalen Pfeile angedeutet, um ca. 10°im Uhrzeigersinn verdreht wird, kommen die Haltenocken 11 des Verdrehsicherungselementes am unteren Rand 7a der zugehörigen Seitenwange 7 bzw. 8 zum Anschlag und begrenzen damit die Verdrehbewegung zuverlässig. Der erlaubte Verdrehwinkel wird primär durch die Gesamtlänge (Größenordnung 10 mm) der Federzungen, genauer: den Abstand zwischen Haltenocke 11 und dem unteren Rand 7a des Kastens 9, festgelegt. Mitbestimmend sind auch die genaue Position der Federzungen 13 und 14 im hinteren Bereich der Aufnahmeeinrichtung 6, also relativ zur Achse 8, und ihre genaue Ausrichtung (Schräge) relativ zum Kasten 9 des Wischblattes 2.

Der Kraftaufwand für ein weiteres, also über den Anschlag des Verdrehsicherungselementes hinausgehendes, Verdrehen des Wischblattes, wie es in manchen Anwendungssituationen erwünscht ist, ist insbesondere abhängig von der Gestaltung der Haltenocken 11 und der Materialstärke der Federzungen 13 und 14, die deren Elastizität mitbedingt. Der Kraftaufwand ist auf diese Weise soweit variierbar, dass gegebenenfalls auch ein vollständiges Blockieren der Haltenocken am Anschlag erreichbar ist.

## Patentansprüche

1. Wischarm für einen Scheibenwischer, umfassend ein Befestigungsteil (12), ein Gelenkteil und eine Wischstange, an deren freies Ende eine Kunststoff-Aufnahmeeinrichtung (6) für ein Wischblatt (2) angeformt ist, die zum Eingriff zwischen zwei Seitenwangen (7, 8) eines Tragsystems (4) des Wischblattes (2) vorgesehen ist, wobei die Aufnahmeeinrichtung (6) in eine quer zwischen den Seitenwangen (7, 8) angeordnete Achse (10) einhängbar ist, so dass das Wischblatt (2) drehbar am Wischarm (1) gelagert ist, wobei
im Bereich eines gelenkteilseitigen Endes der Aufnahmeeinrichtung (6) mindestens eine Federzunge (13, 14) einstückig angeformt ist, die zwischen die beiden Seitenwangen (7, 8) eingreifen kann, **dadurch gekennzeichnet, daß** sich die mindesteus eine Federzunge (13,14) bis über die unteren Ränder (7a) der Seitenwangen (7, 8) hinaus erstrecken kann, und dass am freien Ende der Federzunge (13, 14) eine seitlich ausgreifende Haltenocke (11) angeformt ist, die eine ungehinderte Verdrehbewegung des Wischblattes (2) durch Anschlag der Haltenocke (11) am unteren Rand (7a) einer Seitenwange (7, 8) begrenzen kann.

2. Wischarm nach Anspruch 1,
**dadurch gekennzeichnet, dass** die Größe des ungehinderten Verdrehwinkels zwischen Wischarm (1) und Wischblatt (2) durch Wahl des Abstands zwischen der Haltenocke (11) und dem unteren Rand (7a) einer Seitenwange (7, 8) festlegbar ist.

3. Wischarm nach Anspruch 1 oder 2,
**dadurch gekennzeichnet, dass** seitlich gegenüberliegend zwei Federzungen (13, 14) an der Aufnahmeeinrichtung (6) angeordnet sind, deren Haltenocken (11) jeweils seitlich zur zugehörigen Seitenwange (7, 8) hin ausgreifend angeformt sind.

4. Wischarm nach Anspruch 3,
**dadurch gekennzeichnet, dass** die Federzungen (13, 14) so angefomt sind, dass sie beim Eingriff zwischen die beiden Seitenwangen (7, 8) jeweils an der Innenseite der zugehörigen Seitenwange (7, 8) elastisch anliegen, Können.

5. Wischarm nach Anspruch 4,
**dadurch gekennzeichnet, dass** an der zur Innenseite der zugehörigen Seitenwange (7, 8) hin gerichteten Seite der jeweiligen Federzunge (13, 14) eine flache Führungsfläche (16) angeformt ist.

6. Wischarm nach einem der Ansprüche 1 bis 5,
**dadurch gekennzeichnet, dass** die Haltenocken (11) an ihrer vom Wischarm (1) abgewandten Seite mit einer Einführschräge (11a) ausgebildet sind.

7. Wischhebel mit einem Wischarm nach einem der Ansprüche 1 bis 6 und mit einem Wischblatt, bei dem das Wischblatt als Metallwischblatt (2) oder Kunststoffwischblatt und der Wischarm als Kunststoff-Gelenkarm (1) ausgeführt ist und die Aufnahmeeinrichtung zwischen die Seitenwangen (7, 8) eines im Mittelbügel (4) eines Tragbügelsystems (4, 5) des Metallwischblattes (2) gebildeten Kastens (9) eingreift.

## Claims

1. Wiper arm for a windscreen wiper, comprising a fastening part (12), an articulated part and a wiper rod, on the free end of which a plastics receiving device (6) for a wiper blade (2) is integrally formed, said plastics receiving device being provided for engagement between two side cheeks (7, 8) of a supporting system (4) of the wiper blade (2), wherein the receiving device (6) can be hooked into a spindle (10) arranged transversely between the side cheeks (7, 8) such that the wiper blade (2) is mounted rotatably on the wiper arm (1), wherein at least one spring tongue (13, 14) which can engage between the two side cheeks (7, 8) is integrally formed in the region of an articulated-part-side end of the receiving device (6), **characterized in that** the at least one spring tongue (13, 14) can extend beyond the lower edges (7a) of the side cheeks (7, 8), and **in that** a laterally extending retaining cam (11) is integrally formed on the free end of the spring tongue (13, 14), said retaining cam being able to limit an unobstructed rotational movement of the wiper blade (2) by the retaining cam (11) striking against the lower edge (7a) of a side cheek (7, 8).

2. Wiper arm according to Claim 1,
**characterized in that** the size of the unobstructed rotational angle between the wiper arm (1) and wiper blade (2) can be fixed by selecting the distance between the retaining cam (11) and the lower edge (7a) of a side cheek (7, 8).

3. Wiper arm according to Claim 1 or 2,
**characterized in that** two spring tongues (13, 14) are arranged laterally opposite each other on the receiving device (6), the retaining cams (11) of which spring tongues are each integrally formed so as to extend laterally towards the associated side cheek (7, 8).

4. Wiper arm according to Claim 3,
**characterized in that** the spring tongues (13, 14) are integrally formed in such a manner that they can each bear elastically against the inside of the associated side cheek (7, 8) during engagement between the two side cheeks (7, 8).

5. Wiper arm according to Claim 4,
**characterized in that** a flat guide surface (16) is integrally formed on that side of the respective spring tongue (13, 14) which is directed towards the inside of the associated side cheek (7, 8).

6. Wiper arm according to one of Claims 1 to 5,
**characterized in that** the retaining cams (11) are formed with an insertion slope (11a) on the side thereof which faces away from the wiper arm (1).

7. Wiper lever with a wiper arm according to one of Claims 1 to 6 and with a wiper blade, in which the wiper blade is designed as a metal wiper blade (2) or plastics wiper blade, and the wiper arm is designed as a plastics articulated arm (1), and the receiving device engages between the side cheeks (7, 8) of a box (9) formed in the central bracket (4) of a supporting bracket system (4, 5) of the metal wiper blade (2).

## Revendications

1. Bras d'essuie-glace pour un essuie-glace, comprenant une partie de fixation (12), une partie d'articulation et une tringle d'essuie-glace au niveau de l'extrémité libre de laquelle un dispositif de logement en matière plastique (6) est formé pour recevoir un balai d'essuie-glace (2) et conçu pour s'emboîter entre deux joues latérales (7, 8) d'un système de support (4) du balai d'essuie-glace (2), le dispositif de logement (6) pouvant être accroché dans un axe (10) disposé transversalement entre les joues latérales (7, 8), de telle sorte que le balai d'essuie-glace (2) soit disposé de façon à pouvoir pivoter au niveau du bras d'essuie-glace (1), au moins une languette de ressort (13, 14) étant fabriquée d'un seul tenant dans la zone d'une extrémité du dispositif de logement (6) située du côté de la partie articulée, ladite languette pouvant s'engrener entre les deux joues latérales (7, 8), **caractérisé en ce que** l'au moins une languette de ressort (13, 14) peut s'étendre jusqu'au-delà des bords inférieurs (7a) des joues latérales (7, 8) et qu'une came d'arrêt (11) s'engrenant en côté depuis l'extérieur est formée au niveau de l'extrémité libre de la languette de ressort (13, 14), ladite came pouvant limiter un mouvement de rotation non entravé du balai d'essuie-glace (2) par le biais de la butée de la came d'arrêt (11) placée contre le bord inférieur (7a) d'une joue latérale (7, 8).

2. Bras d'essuie-glace selon la revendication 1, **caractérisé en ce que** la taille de l'angle de rotation non entravé entre le bras d'essuie-glace (1) et le balai d'essuie-glace (2) peut être fixée en choisissant l'écartement entre la came d'arrêt (11) et le bord inférieur (7a) d'une joue latérale (7, 8).

3. Bras d'essuie-glace selon la revendication 1 ou 2, **caractérisé en ce que** deux languettes de ressort (13, 14) placées en vis-à-vis dans le plan latéral sont disposées au niveau du dispositif de logement (6), leurs cames d'arrêt (11) étant respectivement formées de façon à s'engrener respectivement en côté en direction de la joue latérale (7, 8) associée.

4. Bras d'essuie-glace selon la revendication 3, **caractérisé en ce que** les languettes de ressort (13, 14) sont réalisées de telle sorte que lorsqu'elles sont engrenées entre les deux joues latérales (7, 8), elles peuvent respectivement reposer de façon élastique contre le côté intérieur de la joue latérale (7, 8) associée.

5. Bras d'essuie-glace selon la revendication 4, **caractérisé en ce qu'**une surface de guidage plane (16) est formée au niveau du côté de la languette de ressort (13, 14) respective orientée vers le côté intérieur de la joue latérale (7, 8) associée.

6. Bras d'essuie-glace selon l'une quelconque des revendications 1 à 5, **caractérisé en ce que** les cames d'arrêt (11) sont pourvues d'une pente oblique d'introduction (11a au niveau de leur côté opposé au bras d'essuie-glace (1).

7. Levier d'essuie-glace pourvu d'un bras d'essuie-glace selon l'une quelconque des revendications 1 à 6 et d'un balai d'essuie-glace, dans lequel le balai d'essuie-glace prend la forme d'un balai d'essuie-glace (2) en métal ou d'un balai d'essuie-glace en plastique et dans lequel le bras d'essuie-glace prend la forme d'un bras articulé en matière plastique (1) et le dispositif de logement s'emboîte entre les joues latérales (7, 8) d'un caisson (9) formé dans l'étrier central (4) d'un système d'étrier porteur (4, 5) du balai d'essuie-glace (2) en métal.
